# EUROPEAN PATENT APPLICATION

(11) **EP 4 799 814 A1**
(43) Date of publication of application: **02.09.2026**
(21) Application number: 26161745.0
(22) Date of filing: 02.03.2026
(51) Int. Cl.: B33Y 50/02, G06T 7/00, B22F 10/28, B29C 64/153

(54) **VISUAL INSPECTION OF COUNTER DISTORTION SUPPORTS**

(30) Priority: 28.02.2025 US 202519067107
(71) Applicant: RTX Corporation, Farmington, CT 06032 (US)
(72) Inventor: GARDELL, Benjamin, Bristol, 06010 (US)
(74) Representative: Dehns

(57) **Abstract**

A method of inspecting a thin walled structure (100) includes the steps of manufacturing, using PBF-L or PBF-EB techniques, a primary structure wall (104) connected to a shielding wall (102) with a plurality of support pins (106) that extend from the shielding wall (102) to the primary structure wall (104), wherein the primary structure wall (104) includes primary structure wall outer and inner surfaces (104a, 104b) and the shielding wall (102) includes shielding wall outer and inner surfaces (102a, 102b); creating, using a vision inspection system, one or more inspection images of the thin walled structure (100), and analyzing the one or more inspection images to determine if any of the shielding wall outer surface (102a) and shielding wall inner surface (102b) and primary structure wall outer surface (104a) and primary structure wall inner surface (104b) exhibit planar surface distortions that exceed tolerances.

## Description

The present disclosure relates generally to visual inspection of parts made using additive manufacturing (AM) techniques and, more particularly, visual inspection of AM parts that include counter distortion supports.

Many current nondestructive testing methods available for post-AM inspection use high cost techniques, which reduces the cost benefit of using AM techniques to make certain parts.

### SUMMARY

One aspect of this disclosure is directed to a method of inspecting a thin walled structure, including the steps of manufacturing, using PBF-L or PBF-EB techniques, a primary structure wall connected to a shielding wall with a plurality of support pins that extend from the shielding wall to the primary structure wall, wherein the primary structure wall includes primary structure wall outer and inner surfaces and the shielding wall includes shielding wall outer and inner surfaces, creating, using a vision inspection system, one or more inspection images of the thin walled structure, and analyzing the one or more inspection images to determine if any of the shielding wall outer surface and inner surface and primary structure wall outer surface and inner surface exhibit planar surface distortions that exceed tolerances.

### BRIEF DESCRIPTION OF THE DRAWINGS

Fig. 1 is close up photograph of a primary structure wall offset from a shielding wall with a plurality of support pins.
Fig. 2 is perspective photograph of a primary structure wall offset from a shielding wall with a plurality of support pins.
Fig. 3A is a photograph of a view of the structures of Figs. 1 and 2.
Fig. 3B is an inspection image based on the view of Fig. 3A.
Fig. 4A is a photograph of another view of the structures of Figs. 1 and 2.
Fig. 4B is an inspection image based on the view of Fig. 4A.
Fig. 5A is a photograph of another view of the structures of Fig. 1 and 2.
Fig. 5B is an inspection image based on the view of Fig. 5A.

### DETAILED DESCRIPTION

Gas turbine engines include a number of components having primary structure walls, particularly those that include sheet metal-type features. Such parts, which include various ducts, plenums, etc., are difficult to make using additive manufacturing (AM) techniques, such as Laser Powder Bed Fusion (PBF-L) and Electron Beam Powder Bed Fusion (PBF-EB) due to the propensity for distortion to occur with thin (e.g., less than 0.25 inch (6.4 mm)) walls. Alternately, thin walls can be characterized as wall having a planar dimension to width ratio (i.e., an aspect ratio) of eight to one (8:1) or greater (i.e., one or both of the planar dimensions being eight (8) times or more than the thickness of the part). In some examples, thin walled structures can be built with counter distortion structures to provide in-process rigidity to a parent structure that limits or eliminates distortion effects. Using counter distortion structures as part of an AM build process can permit thin walled structures to be built within allowable tolerances for planar distortion. In some examples, it is desirable for primary structure walls **104** to have distortions of no more than ± 0.005 inch (± 0.127 mm) across any planar surface of the primary structure walls **104.**

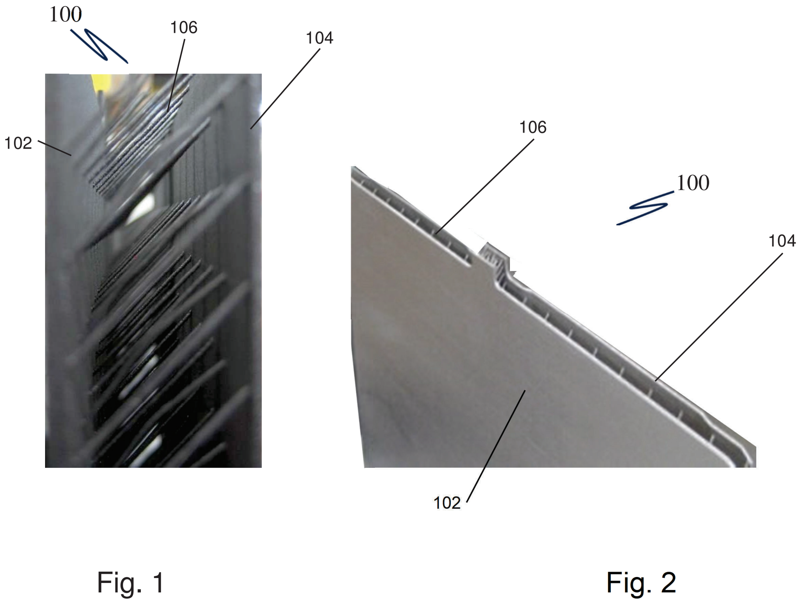

Fig. 1 shows a structure **100** that includes a shielding wall **102** off-set from a primary structure wall **104.** A plurality of support pins **106** connect the shielding wall **102** to the primary structure wall **104.** The shielding wall **102** and the primary structure wall **104** can each have a similar thickness, e.g., less than 0.25 inch (6.4 mm), or any other width, including different thicknesses, deemed appropriate for a particular application. The plurality of support pins **106** are sized and positioned to allow the shielding wall **102** and the plurality of support pins **106** to cooperate to permit the primary structure wall **104** to be manufactured within allowable tolerances for planar distortion. In one example, the plurality of support pins **106** can be about 0.01 inches (0.25 mm) to 0.10 inches (2.5 mm) in diameter and extend from the shielding wall **102** about 0.025 inches (0.6 mm) to about 0.05 inches (1.27 mm) to connect with the primary structure wall **104** at a forty-five degree (45°) inclination. In other examples, the support pins **106** can have different dimensions and connect with the primary structure wall **104** at different angles. The plurality of support pins **106** can be distributed as a function of anticipated distortion with either an increase in support pin **106** density or support pin **106** thickness or both in regions of the primary structure wall **104** where excessive distortion is expected in the absence of the combination of the shielding wall **102** and the plurality of support pins **106.** The shielding wall **102** and the plurality of support pins **106** can be built with a material density sufficient to permit the primary structure wall **104** to be manufactured within allowable tolerances for planar distortion while allowing for ready removal after completion of the thin walled structure **100** build. Fig. 2 presents another view of the thin walled structure **100** that includes a shielding wall **102** off-set from a primary structure wall **104** with a plurality of support pins **106.**

The structure **100,** including the shielding wall **102,** primary structure wall **104,** and support pins **106** can be made from any material suitable for a desired application. For example, the structure **100** can be made from aluminum, an aluminum alloy, titanium, a titanium alloy, nickel-based superalloys, steels, polymeric materials, or any other material deemed appropriate for a particular application. While the shielding wall **102,** primary structure wall **104,** and support pins **106** can all be made from the same material to simplify manufacturing, if appropriate for a particular application, they could also be made from different materials. As discussed above, the thin walled structure **100,** including the shielding wall **102,** primary structure wall **104,** and support pins **106** can be made using PBF-L techniques or, for some applications PBF-EB techniques, vat photopolymerization, or polymer PBF.

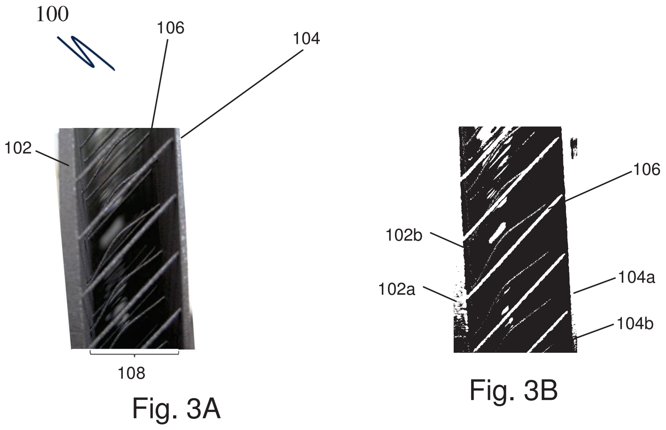

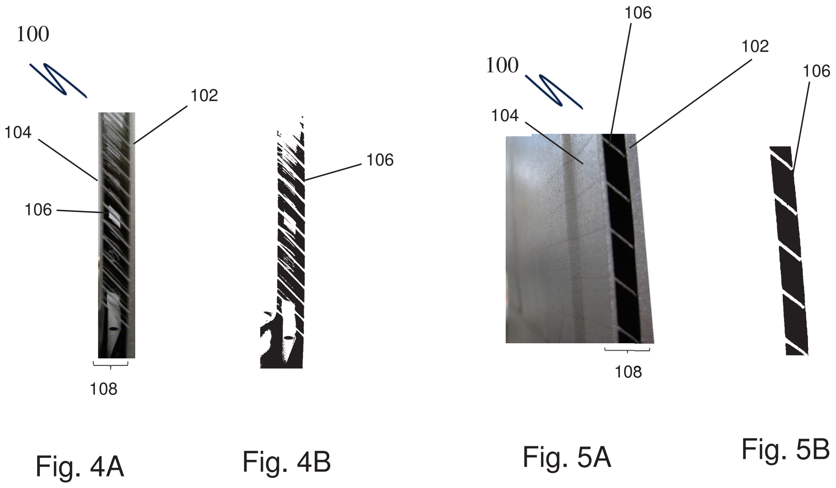

The structure **100** is a good candidate for use of visual inspection techniques for quality control. For example, various elements of the structure **100,** such as the shielding wall **102** and primary structure wall **104,** can be used to calibrate the visual inspection because of their desired "flatness" with little to no distortion across their relatively large surfaces. Figs. 3A,3B, 4A,4B, and 5A,5B show examples of visual inspection images of the structure **100** captured from different perspectives. Fig. 3A is a photograph of the structure **100** including shielding wall **102** (with outer **102a** and inner **102b** surfaces), primary structure wall **104** (with outer **104a** and inner **104b** surfaces), a plurality of support pins **106,** and a gap **108** between the shielding wall inner surface **102b** and the primary structure wall inner surface **104b.** Fig. 3B is an inspection image of the structure **100** from Fig. 3A captured by a vision inspection system. In Fig. 3B, the plurality of support pins **106** are visible. The vision inspection system used to capture the image of Fig. 3B can be any vision inspection system deemed appropriate for a particular application including, but not limited to, vision inspection systems (also known as machine vision systems) available from Keyence, Cognex, and other suppliers. Figs. 4A,4B and 5A,5B are similar image pairs showing other views that might be desirable.

The vison inspection system can be configured to calibrate its images with one or more of the shielding wall outer **102a** and inner **102b** surfaces and the primary structure wall outer **104a** and inner **104b** surfaces to provide one or more reference points for the inspection images (e.g., Figs. 3B, 4B, 5B). The inspection images can be filtered with known techniques, including scripts and/or automation, to provide effective inspection for planar distortion of planar surfaces (i.e., the shielding wall outer **102a** and inner **102b** surface and the primary structure wall outer **104a** and inner **104b** surfaces), structural nonconformance (e.g., distortion or breakage of one or more of the plurality of support pins **106),** and other deviations from identified tolerances and specifications.

In one example (Figs. 3B and 4B), the vision inspection system can be configured to capture at least one image along at least one axis that exists in a plane substantially parallel to shielding wall inner surface **102b** and primary structure wall inner **104b.** Such an image would provide a view through the full length of the gap **108** between shielding wall inner surface **102b** and primary structure wall inner **104b** and would provide images of the plurality of support pins **106** that are visible from that perspective.

In another example (Fig. 5B), the vision system can be configured to capture at least one image along at least one axis that exists in a plane selected to provide an image of only an outer row of the plurality of support pins **106.** The selected plane would not be parallel to shielding wall inner surface **102b** and primary structure wall inner **104b.**

The objective in selecting the various views is to provide automated inspection of shielding wall outer surface **102a** and inner surface **102b** and primary structure wall outer surface **104a** and inner surface **104b** for planar surface distortions that exceed tolerances and to determine whether the plurality of support pins **106** meet the desired manufacturing specification.

The method is scalable to any size primary wall structure **104** that can benefit from the inclusion of a support wall **102** and support pins **106** to address undesirable distortion during manufacture using PBF-L techniques. Exemplary primary wall structures **104** include various ducts (e.g., inlet and exhaust ducts), plenums, shrouds, combustor walls, casings, manifolds, certain vane/blade features (e.g., baffles), struts, etc. A person of ordinary skill will recognize that the disclosed method can be used to build other primary wall structures **104** as well. The disclosed method allows primary wall structures **104** to be built within allowable tolerances for planar distortion without incurring significant cost.

### Discussion of Possible Embodiments

The following are non-exclusive descriptions of possible embodiments of the present invention.

A method of inspecting a thin walled structure includes the steps of additively manufacturing, using PBF-L or PBF-EB techniques, a primary structure wall connected to a shielding wall with a plurality of support pins that extend from the shielding wall to the primary structure wall, wherein the primary structure wall includes primary structure wall outer and inner surfaces and the shielding wall includes shielding wall outer and inner surfaces, creating, using a vision inspection system, one or more inspection images of the thin walled structure, and analyzing the one or more inspection images to determine if any of the shielding wall outer surface and inner surface and primary structure wall outer surface and inner surface exhibit planar surface distortions that exceed tolerances.

The method of the preceding paragraph can optionally include any one or more of the following features, configurations and/or additional elements:
The method in which analyzing the one or more inspection images further includes determining whether the plurality of support pins meet the desired manufacturing specification.

The vison inspection system is calibrated with one or more of the shielding wall outer and inner surfaces and the primary structure wall outer and inner surfaces to provide one or more reference points for the inspection images.

The vision inspection system is configured to capture at least one image along at least one axis that exists in a plane substantially parallel to the shielding wall inner surface and primary structure wall inner to provide a view through the full length of a gap between shielding wall inner surface and primary structure wall inner surface, thereby providing inspection images of the plurality of support pins.

The vision system is configured to capture at least one image along at least one axis that exists in a plane selected to provide an image of only an outer row of the plurality of support pins, wherein the selected plane is not parallel to shielding wall inner surface and primary structure wall inner.

The plurality of support pins connect with the primary structure wall at a forty-five degree (45°) inclination.

The shielding wall and the primary structure both have a thickness less than 0.25 inch (6.4 mm).

The plurality of support pins are sized and positioned to allow the shielding wall and the plurality of support pins to cooperate to permit the primary structure wall to be manufactured within allowable tolerances for planar distortion.

The plurality of support pins are about 0.01 inches (0.25 mm) to 0.10 inches (2.5 mm) in diameter and extend from the shielding wall about 0.025 inches (0.6 mm) to about 0.05 inches (1.27 mm) to connect the shielding wall with the primary structure wall.

The shielding wall, plurality of support pins, and primary structure wall are made from aluminum, an aluminum alloy, titanium, a titanium alloy, nickel-based superalloys, steels, or a polymeric material.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of inspecting a thin walled structure (100), comprising the steps of:
additively manufacturing, using PBF-L or PBF-EB techniques, a primary structure wall (104) connected to a shielding wall (102) with a plurality of support pins (106) that extend from the shielding wall (102) to the primary structure wall (104), wherein the primary structure wall (104) includes primary structure wall outer and inner surfaces (104a, 104b) and the shielding wall (102) includes shielding wall outer and inner surfaces (102a, 102b);
creating, using a vision inspection system, one or more inspection images of the thin walled structure (100); and
analyzing the one or more inspection images to determine planar surface distortions of the thin walled structure (100) by determining whether any portion of the shielding wall outer surface (102a) and shielding wall inner surface (102b) and primary structure wall outer surface (104a) and primary structure wall inner surface (104b) exhibit distortion that exceeds tolerances.

2. The method of claim 1, wherein analyzing the one or more inspection images further includes determining whether the plurality of support pins (106) meet the desired manufacturing specification.

3. The method of claim 1 or 2, wherein the vison inspection system is calibrated with one or more of the shielding wall outer and inner surfaces (102a, 102b) and the primary structure wall outer and inner surfaces (104a, 104b) to provide one or more reference points for the inspection images.

4. The method of claim 1, 2 or 3, wherein the vision inspection system is configured to capture at least one image along at least one axis that exists in a plane substantially parallel to the shielding wall inner surface (102b) and primary structure wall inner surface (104b) to provide a view through the full length of a gap (108) between shielding wall inner surface (102b) and primary structure wall inner surface (104b), thereby providing inspection images of the plurality of support pins (106).

5. The method of any preceding claim, wherein the vision system is configured to capture at least one image along at least one axis that exists in a plane selected to provide an image of only an outer row of the plurality of support pins (106), wherein the selected plane is not parallel to shielding wall inner surface (102b) and primary structure wall inner surface (104b).

6. The method of any preceding claim, wherein the plurality of support pins (106) connect with the primary structure wall (104) at a 45° inclination.

7. The method of any preceding claim, wherein the shielding wall (102) and the primary structure wall (104) both have a thickness less than 0.25 inch (6.4 mm).

8. The method of any preceding claim, wherein the plurality of support pins (106) are sized and positioned to allow the shielding wall (102) and the plurality of support pins (106) to cooperate to permit the primary structure wall (104) to be manufactured within allowable tolerances for planar distortion.

9. The method of any preceding claim, wherein the plurality of support pins (106) are about 0.01 inches (0.25 mm) to 0.10 inches (2.5 mm) in diameter and extend from the shielding wall (102) about 0.025 inches (0.6 mm) to about 0.05 inches (1.27 mm) to connect the shielding wall (102) with the primary structure wall (104).

10. The method of any preceding claim, wherein the shielding wall (102), plurality of support pins (106), and primary structure wall (104) are made from aluminum, an aluminum alloy, titanium, a titanium alloy, nickel-based superalloys, steels, or a polymeric material.
